# EUROPEAN PATENT APPLICATION

(11) **EP 4 838 818 A1**
(43) Date of publication of application: **11.11.2026**
(21) Application number: 24923469.1
(22) Date of filing: 21.11.2024
(51) Int. Cl.: H04L 5/00

(54) **UPLINK FREQUENCY DOMAIN RESOURCE DETERMINATION METHOD AND DEVICE, STORAGE MEDIUM, AND ELECTRONIC DEVICE**

(30) Priority: 06.02.2024 CN 202410170986
(71) Applicant: ZTE CORPORATION, Shenzhen, Guangdong 518057 (CN)
(72) Inventor: GOU, Wei, Shenzhen, Guangdong 518057 (CN); HAN, Xianghui, Shenzhen, Guangdong 518057 (CN); LIU, Xing, Shenzhen, Guangdong 518057 (CN); SHI, Jing, Shenzhen, Guangdong 518057 (CN); KOU, Shuaihua, Shenzhen, Guangdong 518057 (CN)
(74) Representative: Mozzi, Matteo
(86) International application number: PCT/CN2024/133561
(87) International publication number: WO 2025/167267

(57) **Abstract**

Embodiments of the present disclosure provide an uplink frequency domain resource determination method and device, a storage medium, and an electronic device. The method comprises: determining a first uplink frequency domain resource in a downlink (DL) symbol; and executing uplink transmission for a random access process of a UE in the first uplink frequency domain resource.

## Description

### Cross-Reference to Related Application

The present disclosure claims priority to Chinese Patent Application No. CN202410170986.0 filed on February 6, 2024, entitled "Uplink Frequency Domain Resource Determination Method and Device, Storage Medium, and Electronic Device", the entire contents of which are incorporated herein by reference.

### Technical Field

Embodiments of the present disclosure relate to the field of communication technologies, and in particular, relate to an uplink frequency domain resource determination method and device, a storage medium, and an electronic device.

### Background

To improve Uplink (UL) coverage, reduce the latency of UL transmission, and increase the capacity of UL transmission in Time Division Duplex (TDD) systems, Sub-band Full Duplex (SBFD) technology provides sub-band configuration and operations for User Equipment (UEs) in a Radio Resource Control (RRC) connected state (CONNECTED UEs).

However, UEs in an Idle/inactive state (IDLE/INACTIVE UEs) are not configured with corresponding Downlink (DL) Bandwidth Part (BWP) and UL BWP, and can only perform a random access procedure through a common initial UL BWP and a common initial DL BWP. Therefore, the existing SBFD sub-band configuration and operations designed for UEs in the connected state (CONNECTED UEs) are not applicable to UL transmission of UEs in the Idle/Inactive state (IDLE/INACTIVE UEs).

### Summary

Embodiments of the present disclosure provide an uplink frequency domain resource determination method and device, a storage medium, and an electronic device, which may at least solve the problem that the existing SBFD sub-band configuration and operations in the related art are not applicable to UL transmission of IDLE/INACTIVE UEs.

According to an embodiment of the present disclosure, an uplink frequency domain resource determination method applied to a terminal is provided. The method includes: determining a first uplink frequency domain resource in a Downlink (DL) symbol; and performing uplink transmission for a random access procedure of a User Equipment (UE) on the first uplink frequency domain resource.

According to another embodiment of the present disclosure, an uplink frequency domain resource determination method applied to a base station is further provided. The method includes: determining a first uplink frequency domain resource in a Downlink (DL) symbol; and receiving, on the first uplink frequency domain resource, uplink transmission data sent by a User Equipment (UE) during a random access procedure.

According to another embodiment of the present disclosure, an uplink frequency domain resource determination device disposed on a terminal is provided. The device includes: a first determination module, configured to determine a first uplink frequency domain resource in a Downlink (DL) symbol; and a transmission module, configured to perform uplink transmission for a random access procedure of a User Equipment (UE) on the first uplink frequency domain resource.

According to another embodiment of the present disclosure, an uplink frequency domain resource determination device disposed on a base station is further provided. The device includes: a second determination module, configured to determine a first uplink frequency domain resource in a Downlink (DL) symbol; and a receiving module, configured to receive, on the first uplink frequency domain resource, uplink transmission data sent by a User Equipment (UE) during a random access procedure.

According to another embodiment of the present disclosure, a computer-readable storage medium is further provided. A computer program is stored in the computer-readable storage medium, and the computer program is configured to, when running, execute operations of any one of the foregoing method embodiments.

According to another embodiment of the present disclosure, an electronic device is further provided, including a memory and a processor. A computer program is stored in the memory, and the processor is configured to run the computer program to execute operations of any one of the foregoing method embodiments.

### Brief Description of the Drawings

FIG. 1 is a schematic diagram illustrating a first SBFD sub-band configuration scheme in a DL symbol in the related art;
FIG. 2 is a schematic diagram illustrating a second SBFD sub-band configuration scheme in a DL symbol in the related art;
FIG. 3 is a hardware structural block diagram of a network device for executing an uplink frequency domain resource determination method according to an embodiment of the present disclosure;
FIG. 4 is a flowchart of an uplink frequency domain resource determination method according to an embodiment of the present disclosure;
FIG. 5 is a schematic diagram for determining resource A in the frequency domain within a DL symbol according to an embodiment of the present disclosure;
FIG. 6 is a schematic diagram for determining a second initial UL BWP in the frequency domain within a DL symbol according to an embodiment of the present disclosure;
FIG. 7 is a schematic diagram for determining a second UL sub-band in the frequency domain within a DL symbol according to an embodiment of the present disclosure;
FIG. 8 is a flowchart of an uplink frequency domain resource determination method according to another embodiment of the present disclosure;
FIG. 9 is a schematic diagram for determining a DL sub-band according to an embodiment of the present disclosure;
FIG. 10 is a schematic diagram for determining a DL sub-band according to another embodiment of the present disclosure;
FIG. 11 is a schematic diagram for determining a DL sub-band according to still another embodiment of the present disclosure;
FIG. 12 is a schematic diagram of an exemplary implementation of Method 2 according to an embodiment of the present disclosure;
FIG. 13 is a schematic diagram of an exemplary implementation of Method 3 according to an embodiment of the present disclosure;
FIG. 14 is a structural block diagram of an uplink frequency domain resource determination device according to an embodiment of the present disclosure; and
FIG. 15 is a structural block diagram of an uplink frequency domain resource determination device according to another embodiment of the present disclosure.

### Detailed Description of the Embodiments

The embodiments of the present disclosure will be described in detail below with reference to the accompanying drawings in conjunction with the embodiments.

For existing SBFD sub-band configuration schemes designed for CONNECTED UEs, one UL sub-band and at most two DL sub-bands are configured in each Downlink (DL) symbol/slot among part or all DL symbols/slots. For example, the UL sub-band and the DL sub-band are configured in a pair formed by a Downlink Bandwidth Part (DL BWP) and an Uplink Bandwidth Part (UL BWP), and the pair of the DL BWP and the UL BWP share the same center frequency. In the frequency domain, frequency domain resources of the UL sub-band and frequency domain resources of the DL sub-band are generally configured within the frequency domain range of the DL BWP, that is, the frequency domain range of the DL BWP covers the frequency domain ranges of the UL sub-band and the DL sub-band, and the DL BWP is valid in the DL symbols or slots. Alternatively, frequency domain resources of the UL sub-band and frequency domain resources of the DL sub-band may be configured outside the DL BWP, for instance, part or all of frequency domain resources of the UL sub-band and frequency domain resources of the DL sub-band exceed the frequency domain range of the DL BWP.

The above UL sub-band and DL sub-band are collectively referred to as an SBFD sub-band. One UL sub-band and at most two DL sub-bands are configured in each DL symbol/slot among part or all DL symbols/slots, that is, one SBFD sub-band is configured within each of the DL symbols/slots, and such an SBFD sub-band generally includes at least one DL sub-band and one UL sub-band.

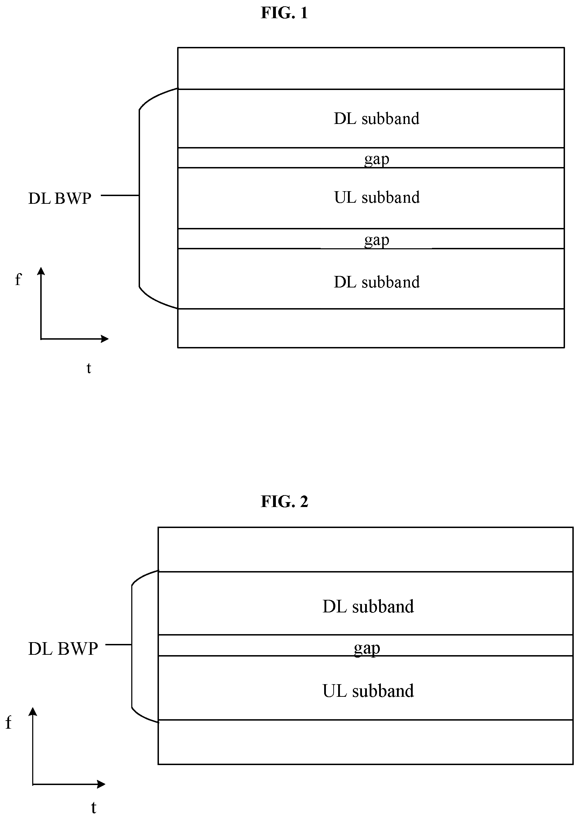

For example, in a 100 MHz TDD carrier, 20 contiguous Resource Blocks (RBs) are configured as an UL sub-band inside the DL BWP of a DL symbol/slot. Remaining frequency domain resources of the DL BWP serve as the DL sub-band (no gap may be configured), or an additional DL sub-band may also be configured within the DL BWP of the DL symbol/slot. In this way, the UL sub-band in the DL symbol/slot can be used for UL transmission of CONNECTED UEs, and the DL sub-band in the DL symbol/slot can be used for DL reception of CONNECTED UEs. As shown in FIG. 1, two DL sub-bands and one UL sub-band are configured in a DL symbol/slot, where the UL sub-band is arranged between the two DL sub-bands, and such a frequency-domain structure is generally named "DUD". As illustrated in FIG. 2, one UL sub-band and one DL sub-band are configured in a DL symbol, and this frequency-domain structure is generally referred to as "DU" or "UD".

At the current stage, Sub-band Full Duplex (SBFD) technology has the following characteristics:
A base station is capable of simultaneously performing reception (on the UL sub-band) and transmission (on the DL sub-band) within the same time domain. A UE cannot simultaneously perform reception (on the DL sub-band) and transmission (on the UL sub-band) within the same time domain. The UL sub-band and the DL sub-band are configured within the same OFDM symbol/slot and are frequency division multiplexed.

When IDLE/INACTIVE UEs execute a random access procedure, associated UL transmission and DL reception are respectively performed based on an initial UL BWP and an initial DL BWP. The initial UL BWP and the initial DL BWP are cell common channels from the perspective of UEs, which means that all UEs within the cell share the same initial UL BWP and the same initial DL BWP. Since IDLE/INACTIVE UEs are not assigned UE specific DL BWP and UE specific UL BWP and only have one common initial UL BWP and one common initial DL BWP, the foregoing SBFD sub-band configurations and operations designed for CONNECTED UEs are not applicable to IDLE/INACTIVE UEs.

For ease of description, relevant technical terms are defined as follows:
A symbol configured with an SBFD sub-band is defined as an SBFD symbol; and a slot containing SBFD symbols is defined as an SBFD slot. A symbol not configured with any SBFD sub-band is defined as a non-SBFD symbol (i.e., a conventional symbol); and a slot that does not contain any SBFD symbols is defined as a non-SBFD slot.

It should be noted that the terms "first", "second" and the like used in the specification, claims and accompanying drawings of the present disclosure are merely intended to distinguish similar objects, and are not necessarily used to describe a specific sequence or order.

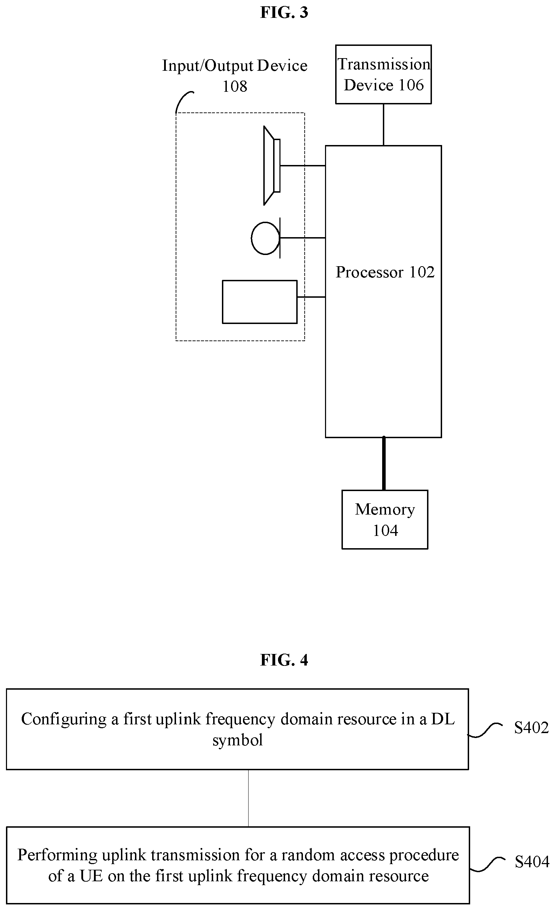

The method embodiments provided by the embodiments of the present disclosure may be executed on a network device, a computer terminal, or a similar computing apparatus. Taking execution on a network device as an example, FIG. 3 is a hardware structural block diagram of a network device for executing an uplink frequency domain resource determination method according to an embodiment of the present disclosure. As shown in FIG. 3, the network device may include one or more processors 102 (only one is illustrated in FIG. 3; the processor 102 may include but is not limited to processing devices such as a Micro-Controller Unit (MCU) or a Field Programmable Gate Array (FPGA)) and a memory 104 for storing data. The network device may further include a transmission device 106 for communication functions and an input/output device 108. Those having ordinary skill in the art may understand that the structure shown in FIG. 3 is merely illustrative and shall not limit the structure of the foregoing network device. For example, the network device may include more or fewer components than those shown in FIG. 3, or may adopt a different configuration from that shown in FIG. 3.

The memory 104 may store computer programs, such as software programs and modules of application software, for example, the computer program corresponding to the uplink frequency domain resource determination method according to the embodiments of the present disclosure. The processor 102 executes various functional applications and data processing by running the computer programs stored in the memory 104, so as to implement the foregoing methods. The memory 104 may include a high-speed random access memory, and may further include a non-volatile memory, such as one or more magnetic storage devices, flash memory, or other non-volatile solid-state memories. In some embodiments, the memory 104 may further include a memory disposed remotely relative to the processor 102, and such remote memories may be connected to the network device via a network. Examples of the foregoing network include but are not limited to the Internet, an intranet, a local area network, a mobile communication network, and any combination thereof.

The transmission device 106 is configured to receive or transmit data via a network. Specific examples of the foregoing network may include a wireless network provided by a communication service provider of the network device. In an embodiment, the transmission device 106 includes a Network Interface Controller (NIC), which may be connected to other network devices via a base station to communicate with the Internet. In another embodiment, the transmission device 106 may be a Radio Frequency (RF) module, which is configured to communicate with the Internet in a wireless manner.

In the related art, an SBFD sub-band (including UL sub-band(s) and DL sub-band(s)) is configured in a DL symbol/F symbol. Frequency domain resources of such UL sub-band(s) and DL sub-band(s) are configured within the frequency domain ranges of a DL BWP and a UL BWP, and the center frequencies of the DL BWP and the UL BWP are aligned. Based on the foregoing existing configurations, an uplink frequency domain resource determination method running on the foregoing network device is provided in the present embodiment, and the method is applied to a terminal. FIG. 4 is a flowchart of an uplink frequency domain resource determination method according to an embodiment of the present disclosure. As shown in FIG. 4, the flowchart includes the following operations S402 and S404.

In operation S402, a first uplink frequency domain resource is configured in a DL symbol.

In the related art, a first initial UL BWP for uplink transmission is configured within a UL symbol. To support the random access procedure and subsequent data transmission of IDLE/INACTIVE UEs, a UL sub-band for UL transmission is configured in the DL symbol. On this basis, the present embodiment additionally configures/determines a first uplink frequency domain resource in a DL symbol. In some embodiments, configuring/determining the first uplink frequency domain resource includes: configuring a plurality of contiguous Resource Blocks (RBs) (hereinafter referred to as resource A) in the DL symbol based on a first UL sub-band in the DL symbol, wherein resource A overlaps with the first UL sub-band of the DL symbol in a frequency domain. The first UL sub-band is a cell-common UL sub-band.

In the present embodiment, the relationship between frequency domain resources of resource A and frequency domain resources of the first UL sub-band includes complete inclusion or partial inclusion, i.e., resource A overlaps with the first UL sub-band of the DL symbol in the frequency domain.

Exemplarily, typical scenarios include: the frequency domain range of the first UL sub-band fully contains frequency domain resources of resource A; frequency domain resources of resource A fully contain the frequency domain range of the first UL sub-band; or the frequency domain range of the first UL sub-band partially overlaps with the frequency domain range of resource A.

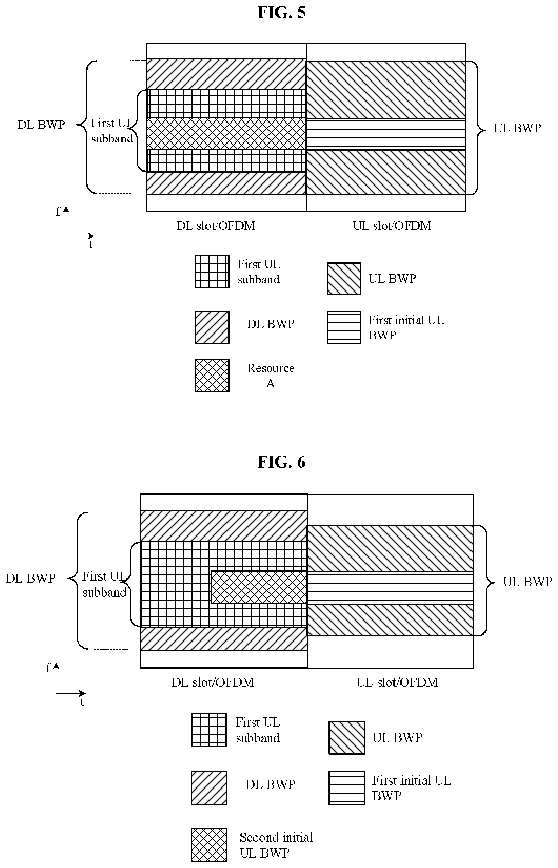

FIG. 5 is a schematic diagram for determining resource A in the frequency domain within a DL symbol according to an embodiment of the present disclosure, which illustrates a scenario where the frequency domain range of the first UL sub-band fully contains the frequency domain range of resource A.

In the present embodiment, frequency domain resources of resource A and frequency domain resources of the first UL sub-band may be contiguous in the frequency domain. Specifically, to reduce the number of frequency domain gaps between resource A and the UL sub-band and avoid waste of frequency domain resources, frequency domain resources of resource A and frequency domain resources of the first UL sub-band are configured to be contiguous in the frequency domain.

In the present embodiment, configuring contiguous resource A in the DL symbol includes: determining resource A according to a start resource block or an end resource block of a first UL sub-band in the DL symbol and based on a first offset, wherein the first offset is predefined, or the first offset is notified by a base station via signaling.

In an embodiment, if the start RB or end RB of the UL sub-band is an incomplete RB (for example, part of subcarriers of the RB fall within the UL sub-band and the remaining subcarriers fall outside the UL sub-band), the base station and the UE agree to take the incomplete RB or the next RB after the incomplete RB as the starting point of the offset.

If the incomplete RB is agreed as the starting point of the offset, subcarriers within the incomplete RB that belong to the UL sub-band shall be counted as part of resource A, while subcarriers within the incomplete RB that do not belong to the UL sub-band shall not be counted as part of resource A.

In embodiments of the present disclosure, the frequency domain range of resource A generally does not exceed the frequency domain range of the first UL sub-band. Nevertheless, for certain specific scenarios, the frequency domain range of resource A may exceed that of the first UL sub-band; that is, the frequency domain resources and the size of resource A can be independently configured by the base station.

In the present embodiment, resource A shares the same time-domain period and/or time-domain position as the first UL sub-band. For example, resource A and the first UL sub-band have identical periods, and occupy the same slot and/or symbol positions within one period. In this way, the maximum frequency domain range of configured resource A has the same frequency domain size as the first initial UL BWP, while the frequency domain position of resource A is not necessarily consistent with that of the first initial UL BWP, wherein the first initial UL BWP is configured within a UL symbol. FIG. 5 only illustrates a scenario where the frequency domain resource size of resource A is equal to that of the first initial UL BWP, and the frequency domain position of resource A differs from that of the first initial UL BWP.

In the present embodiment, the number of the RBs does not exceed the number of RBs corresponding to the first initial UL BWP in the frequency domain, and the first initial UL BWP is configured for UL transmission in a UL symbol.

In the present embodiment, configuring contiguous resource A in the DL symbol includes one of the following operations: determining a plurality of contiguous resource blocks, which start from one boundary of a first UL sub-band and extend inward within the first UL sub-band, as resource A; or determining a plurality of resource blocks at the center of the first UL sub-band as resource A.

As an example, the maximum number of RBs for resource A is obtained by extending toward both sides of the first UL sub-band starting from RB(s) at or near the center of the first UL sub-band, and such number of RBs is equal to the number of RBs of the initial UL BWP. That is, at most m RBs (m is an integer greater than or equal to 0) at or near the center of the first UL sub-band are determined as resource A, where m equals the number of RBs of the initial UL BWP. In some embodiments, multiple manners are available for determining frequency domain positions of the RBs, for example, a central RB among the m RBs is determined first, and other RBs are determined by extending toward both sides of the UL sub-band.

As another example, a start RB of resource A is determined, and other RBs are determined by extending toward one side of the first UL sub-band.

As a further example, an end RB of resource A is determined, and other RBs are determined by extending toward one side of the UL sub-band.

In an exemplary configuration method, the position and size of resource A are determined as follows:
Starting from the $\left⌈\left({N}_{ULsubband}^{size}-m\right)/2\right⌉$-th RB of the first UL sub-band, where ${N}_{ULsubband}^{size}$ denotes the bandwidth of the first UL sub-band, i.e., the total number of RBs contained in the first UL sub-band, determining at most m contiguous RBs extending toward one side of the UL sub-band and configuring the m contiguous RBs as resource A. The base station and the UE pre-agree whether incomplete boundary RBs are included in resource A; that is, the base station and the UE may pre-agree whether the $\left⌈\left({N}_{ULsubband}^{size}-m\right)/2\right⌉$-th RB is included in resource A. Resource A obtained via this scheme is generally located at the center of the first UL sub-band, which avoids use of edge RBs of the first UL sub-band and mitigates interference from the DL sub-band(s) within resource A.

The purpose of determining resource A from the first UL sub-band in the present embodiment is as follows: when an IDLE or INACTIVE UE performs UL transmission on the first UL sub-band, the UE can acquire, from the UL sub-band, frequency domain resources whose size does not exceed that of the initial UL BWP, so that the UE can carry out UL transmission on the acquired resources. Since the base station cannot know the supported frequency bandwidth capability of the IDLE or INACTIVE UE, frequency domain resources are allocated to such IDLE or INACTIVE UE according to the frequency domain size of the initial UL BWP. The initial UL BWP is defaulted to be supported by the UE, and generally features a relatively small frequency domain size. After a UE accesses the network (for example, a CONNECTED UE), if no UE-specific UL sub-band is configured for the UE, the UE can also use resource A. In addition, if no UE-specific UL sub-band is configured for the UE, the base station and the UE may agree that the CONNECTED UE can also use the entire UL sub-band (the UL sub-band is a cell-common UL sub-band). For example, the CONNECTED UE may use the PUSCH resource set/PUCCH resource set/PRACH (PRACH occasion) resource set associated with resource A. For another example, the PUSCH resource set/PUCCH resource set/PRACH (PRACH occasion) resource set associated with the first UL sub-band.

In an embodiment, the base station and the UE may agree not to explicitly define the term "resource A", while still using the time-frequency resources corresponding to resource A. That is, a block of time-frequency resources is defined by adopting the rule for defining resource A, and such time-frequency resources replace the abovementioned resource A without requiring the use of the term "resource A" for such time-frequency resources. For example, the time-frequency resources of the first UL sub-band used for PUSCH (namely msg3) scheduled by the RAR UL grant in the random access procedure are defined as follows: within a DL symbol, at most n (n being an integer greater than or equal to 0) contiguous RBs starting from the start RB of the first UL sub-band can be allocated as frequency domain resources for msg3 transmission (for example, the RBs determined within the first UL sub-band can also be used for PRACH sequence transmission, HARQ-ACK PUCCH transmission corresponding to msg4, or frequency domain resource allocation for such PUCCH), where n equals the number of RBs of the initial UL BWP. Alternatively, as another specific example, at most k (k being an integer greater than or equal to 0) RBs starting from RB(s) at or near the center of the first UL sub-band in a DL symbol can be allocated as frequency domain resources for msg3 transmission (for example, the RBs determined within the first UL sub-band can also be used for HARQ-ACK PUCCH transmission corresponding to msg4 or frequency domain resource allocation for such PUCCH), where k equals the number of RBs of the initial UL BWP. That is, at most k central RBs of the first UL sub-band are used for msg3 transmission, with k equal to the RB count of the initial UL BWP. Multiple specific determination methods for the k RBs are available: for example, first determining the central RB among the k RBs allocated for msg3 transmission, then extending toward both sides to determine other RBs; or determining the first RB used for msg3 transmission, then extending toward one side to obtain k RBs; or determining the start or end RB of the frequency domain resource allocation for msg3 transmission, then extending toward one side to obtain k RBs. One exemplary method is provided as follows: starting from the $\left⌈\left({N}_{ULsubband}^{size}-m\right)/2\right⌉$-th RB of the first UL sub-band (the base station and the UE agree whether such RB is included), at most k RBs are allocated as frequency domain resources for msg3 transmission (the base station and the UE agree whether incomplete boundary RBs are included), where ${N}_{ULsubband}^{size}$ denotes the bandwidth of the first UL sub-band measured in RBs, i.e., the total RB count of the UL sub-band. Alternatively, the base station and the UE may agree that the frequency domain position and size of the resource block determined within the first UL sub-band are defaulted to be identical to those of the initial UL BWP; or, the resource block determined within the first UL sub-band is defined as the overlapping frequency domain resources between the first UL sub-band and the initial UL BWP. The time-frequency resource block determined via the above scheme can be used by IDLE or INACTIVE UEs, and can also be used by CONNECTED UEs when a cell-common UL sub-band is configured but no UE-specific UL sub-band resources are configured for the UEs. The first UL sub-band described herein may be a cell-common UL sub-band or a UE-specific UL sub-band at the UE level.

In the present embodiment, resource A located within the first UL sub-band in a DL symbol/slot has identical functions as the configured initial UL BWP. For example, resource A can be used for UL transmission in the random access procedure of IDLE/INACTIVE UEs, including but not limited to PRACH transmission, transmission of PUSCH (namely msg3) scheduled by the RAR UL grant in the random access procedure, HARQ-ACK PUCCH transmission corresponding to msg4, or frequency domain resource allocation for such PUCCH. Alternatively or additionally, resource A can also be applied to subsequent UL transmission such as UL transmission for CONNECTED UEs. DL transmission related to random access can be performed based on the initial DL BWP in the DL symbol/F symbols. The base station and the UE may agree that the frequency domain position and size of resource A within the first UL sub-band of a DL symbol can be determined to be the same as those of the initial UL BWP. Alternatively, the base station and the UE may agree that, within the first UL sub-band of a DL symbol, the overlapping portion between frequency domain resources of the first UL sub-band and frequency domain resources of the initial UL BWP is defined as resource A.

Based on the foregoing resource configuration schemes combined with characteristics of TDD systems, the initial UL BWP (i.e., the first initial UL BWP) and the initial DL BWP exist in pairs and share the same frequency domain center frequency. In such cases, the first UL sub-band or resource A overlaps with the DL BWP of the DL symbol in the frequency domain, that is, time-frequency overlap occurs between the initial DL BWP and resource A within the DL symbol. Nevertheless, frequency domain resources of the initial DL BWP shall not overlap with frequency domain resources of resource A or the UL sub-band in the frequency domain. For example, when the base station configures frequency domain resources of resource A (or the first UL sub-band), the base station shall ensure that such frequency domain resources do not overlap with frequency domain resources of the initial DL BWP.

For scenarios where the first UL sub-band or resource A overlaps with the initial DL BWP of the DL symbol in the frequency domain, the base station avoids, via configuration or scheduling, time-domain overlap between DL reception on the initial DL BWP and UL transmission on resource A for a single UE; alternatively, the UE regards the initial DL BWP as invalid or unavailable within the DL symbol containing resource A.

Exemplarily, the base station and the UE may agree to configure the RBs and the initial DL BWP to adopt time division multiplexing, or configure UL transmission on the RBs and DL reception on the initial DL BWP to have different usage priorities when UL transmission on the RBs and DL reception on the initial DL BWP overlap in the time domain.

In an exemplary embodiment, if frequency domain resources of resource A (or the first UL sub-band) configured by the base station overlap with frequency domain resources of the initial DL BWP, the UE regards the initial DL BWP as having higher priority. That is, partial frequency domain resources of resource A (or the first UL sub-band) falling within the frequency domain range of the initial DL BWP are invalid and unavailable for UL transmission, since DL transmission has higher priority on such partial frequency domain resources.

In an exemplary embodiment, frequency domain resources of the initial DL BWP may overlap with frequency domain resources of resource A (or the first UL sub-band) in the frequency domain, while frequency domain resources of the initial DL BWP and frequency domain resources of resource A (or the first UL sub-band) are time division multiplexed (i.e., do not overlap in the time domain). For example, for UEs aware of the frequency domain configuration of resource A (or the first UL sub-band), the overlapping portion of the initial DL BWP is invalid and unavailable within a DL symbol/F symbol configured with resource A (or the first UL sub-band). In other words, the originally configured initial DL BWP is unavailable on such DL symbol/F symbol.

In the present embodiment, resource A is configured via system information blocks or system broadcast information.

For example, resource A may be configured in PBCH (i.e., MIB), SIB1, or other SIBs. Alternatively, resource A may be configured together with the first UL sub-band, that is, resource A is configured simultaneously within RRC signaling for the first UL sub-band.

UE specific signaling configuration for resource A may also be avoided to reduce signaling overhead. For example, the base station and the UE agree that resource A always exists within the first UL sub-band, frequency domain resources of resource A are determined from the first UL sub-band according to the above methods, and time-domain resources (symbols and/or slots) of resource A are always identical to those of the first UL sub-band.

In operation S402 of the present embodiment, configuring/determining a first uplink frequency domain resource within a DL symbol further includes: configuring a second initial UL BWP in the DL symbol as the first uplink frequency domain resource.

In an embodiment, the frequency domain size of the second initial UL BWP does not exceed the frequency domain size of the first initial UL BWP.

In an embodiment, the second initial UL BWP has the same frequency domain size as the first initial UL BWP within a UL symbol.

Configuring a second initial UL BWP in a DL symbol as the first uplink frequency domain resource can be implemented by extending the first initial UL BWP from the UL symbol into the DL symbol, or by configuring an independent initial UL BWP within the DL symbol via the base station. This enables the UE to utilize the initial UL BWP within the DL symbol for UL transmission in random access and subsequent data transmission. In addition, the SCS and/or CP of the initial UL BWP within the DL symbol are determined to be identical to the SCS and/or CP of the initial DL BWP, or identical to the SCS and/or CP of the DL BWP.

Extending the first initial UL BWP from the UL symbol to the DL symbol includes two modes: configuring the first initial UL BWP in the DL symbol, where the first initial UL BWP in the DL symbol is identical to the first initial UL BWP in the UL symbol in the frequency domain; or in response to a first UL sub-band being configured in the DL symbol, configuring the first initial UL BWP to be valid in the DL symbol (i.e., the base station and the UE agree that if a first UL sub-band is configured on a DL symbol, the first initial UL BWP is also available on such DL symbol).

In the present embodiment, the second initial UL BWP configured in the DL symbol has the same frequency domain position as the first initial UL BWP in the UL symbol, facilitating operation of the second initial UL BWP on the DL symbol and the first initial UL BWP on the UL symbol. In the time domain, the second initial UL BWP in the DL symbol has the same period and/or position as the first UL sub-band. As shown in FIG. 6, the second initial UL BWP in the DL symbol/F symbol has an identical time-domain period pattern as the UL sub-band, and occupies the same symbols and/or slots as the UL sub-band.

In an embodiment, the frequency domain position of the second initial UL BWP in the DL symbol may differ from that of the first initial UL BWP in the UL symbol while maintaining the same frequency domain size. An offset between the first initial UL BWP and the second initial UL BWP in the frequency domain may be defined. For example, an offset is introduced relative to the start RB or end RB of the first initial UL BWP in the UL symbol to determine the second initial UL BWP in the DL symbol. This configuration enables frequency division between the second initial UL BWP and the initial DL BWP in the frequency domain.

In an embodiment, if the start RB or end RB is an incomplete RB, the base station and the UE agree to take such RB or the next RB after such RB as the starting point of the offset. Further, if such RB is agreed as the offset starting point, subcarriers within the RB that fall inside the first UL sub-band shall be counted as part of the second initial UL BWP, while subcarriers within the RB that fall outside the first UL sub-band shall not be counted as part of the second initial UL BWP.

In the present embodiment, frequency domain resources of the second initial UL BWP and frequency domain resources of the first UL sub-band in the DL symbol may fully overlap, partially overlap, or have no overlap in the frequency domain.

Exemplary scenarios are as follows: frequency domain resources of the second initial UL BWP fully fall within the frequency domain range of the first UL sub-band; part of frequency domain resources of the second initial UL BWP fall within the frequency domain range of the first UL sub-band; or all frequency domain resources of the second initial UL BWP fall outside the frequency domain range of the first UL sub-band.

The base station configures an independent initial UL BWP (namely the second initial UL BWP) in the DL symbol configured with an SBFD sub-band. Such independent initial UL BWP is used by UEs aware of SBFD configurations for UL transmission related to random access and subsequent UL transmission. This independent initial UL BWP differs from the first initial UL BWP in the UL symbol and is independent relative to the first initial UL BWP in the UL symbol.

Time-domain resource configuration for the independent initial UL BWP includes configuring a periodic pattern for such independent initial UL BWP in the time domain, with slot or symbol as the configuration granularity. Within each periodic pattern, the slots or symbols allocated for the independent initial UL BWP remain unchanged. The independent initial UL BWP in the DL symbol shares the same time-domain periodic pattern as the first UL sub-band, i.e., the independent initial UL BWP occupies the same symbols and/or slots as the first UL sub-band in the DL symbol. Frequency domain resources of the independent initial UL BWP in the DL symbol may fall inside the frequency domain resources of the first UL sub-band, outside the frequency domain resources of the first UL sub-band, or partially overlap with the frequency domain resources of the first UL sub-band.

In an embodiment, frequency domain resources of the independent initial UL BWP that fall outside the frequency domain resources of the first UL sub-band are invalid, meaning such frequency domain resources cannot be used for UL transmission.

In an embodiment, frequency domain resources of the independent initial UL BWP that fall outside the frequency domain resources of the first UL sub-band are also valid and available for UL transmission. In this case, frequency domain resources available for UL transmission in the DL symbol are the union of frequency domain resources of the independent initial UL BWP and frequency domain resources of the first UL sub-band.

Via the above configuration schemes, two initial UL BWPs exist in the system: one located in the UL symbol and the other located in the DL symbol. The former is applicable to all types of UEs, including UEs aware of SBFD configurations and UEs unaware of SBFD configurations; while the latter is only applicable to UEs aware of SBFD configurations.

In an embodiment, if one of the two initial UL BWP is not configured, the other configured initial UL BWP is applicable to both DL and UL symbols. A typical scenario is that the initial UL BWP in the DL symbol is not configured while the initial UL BWP in the UL symbol is configured, and the configured initial UL BWP is also applicable to DL symbols. An atypical scenario is that the initial UL BWP in the UL symbol is not configured while the initial UL BWP in the DL symbol is configured, and the configured initial UL BWP is also applicable to UL symbols.

The term "independent initial UL BWP" in embodiments of the present disclosure is merely a naming label; alternative designations may be adopted while retaining the functions described in embodiments of the present disclosure.

In the present embodiment, for UEs supporting SBFD operations, IDLE/INACTIVE UEs can perform PRACH transmission, msg3 transmission, and msg4 PUCCH transmission on the second initial UL BWP in the DL symbol.

In operation S402 of the present embodiment, configuring the first uplink frequency domain resource in the DL symbol includes: configuring a second UL sub-band in the DL symbol as the first uplink frequency domain resource.

The second UL sub-band is independently configured and exists separately from the foregoing first UL sub-band. In the time domain, the second UL sub-band shares the same period and/or position as the first UL sub-band. That is, within one periodic pattern, the second UL sub-band occupies the same symbol and slot positions as the first UL sub-band; or if no time-domain resource position or period is configured for the second UL sub-band, the time-domain resource position and period of the second UL sub-band are identical to those of the first UL sub-band; or the frequency domain start RB of the second UL sub-band is defined based on a common RB grid (e.g., the start RB of common RBs), for example, the frequency domain start RB of the second UL sub-band has an offset relative to the start RB of the common RB grid.

In the present embodiment, for UEs aware of SBFD configurations, the base station configures PRACH transmission resources within the second UL sub-band, and the second UL sub-band can be used for UL transmission in the random access procedure, such as PRACH transmission, msg3 transmission, and msg4 PUCCH transmission. When the UE performs PRACH transmission on the PRACH transmission resources configured within the second UL sub-band, the base station transmits a PDSCH scheduled by DCI scrambled by RA-RNTI on the initial DL BWP in response to such PRACH transmission. In response to such PDSCH, the UE transmits PUSCH (namely msg3) scheduled by the RAR UL grant on the second UL sub-band. In response to such PUSCH, the base station transmits a PDSCH (namely msg4) scheduled by DCI scrambled by TC-RNTI on the initial DL BWP. The UE transmits the HARQ-ACK PUCCH (namely msg4 PUCCH) corresponding to such PDSCH on the second UL sub-band.

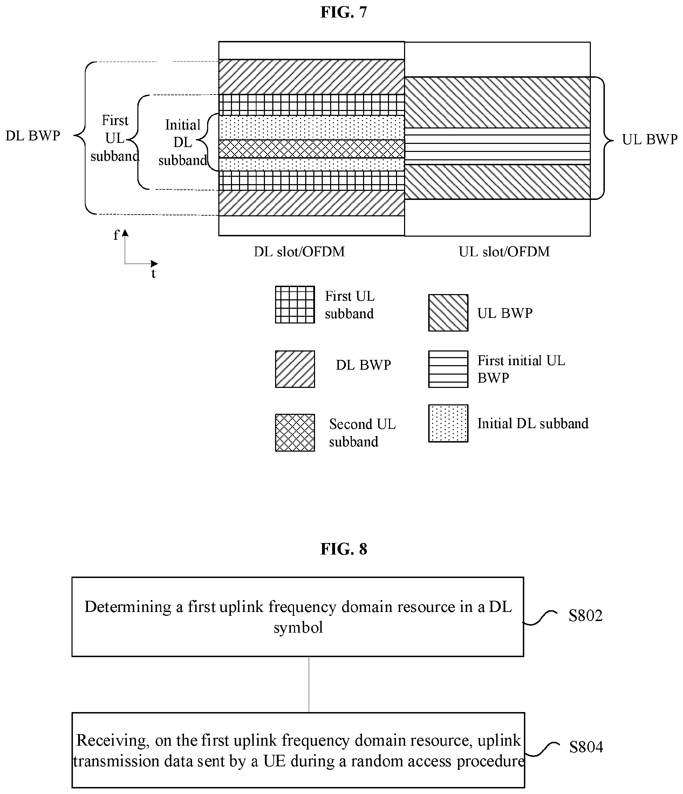

In an embodiment, as shown in FIG. 7, the second UL sub-band is configured within the frequency domain range of the initial DL BWP of the DL symbol. In this case, both the second UL sub-band and the first UL sub-band exist simultaneously in the DL symbol, and the base station and the UE may agree that UL transmission in the random access procedure is performed on the second UL sub-band.

In an embodiment, PRACH transmission of the UE can be performed either on the second UL sub-band or on the first UL sub-band. If the UE selects to perform PRACH transmission on the second UL sub-band (or the first UL sub-band), other UL transmissions (such as subsequent msg3 transmission or msg4 PUCCH transmission) associated with such PRACH transmission are also performed on the second UL sub-band (or the first UL sub-band).

In the present embodiment, to reduce the number of gaps between UL sub-band(s) and DL sub-band(s) in the frequency domain, the base station configures the frequency domain relationship between frequency domain resources of the second UL sub-band and frequency domain resources of the first UL sub-band to be complete inclusion or partial inclusion.

Exemplarily, in terms of frequency domain ranges, the first UL sub-band fully contains the second UL sub-band, or the second UL sub-band fully contains the first UL sub-band, or the first UL sub-band partially contains the second UL sub-band, or the second UL sub-band partially contains the first UL sub-band.

In an embodiment, frequency domain resources of the first UL sub-band and the second UL sub-band may also be contiguous, meaning no redundant gaps exist between the first UL sub-band and the second UL sub-band to form contiguous frequency domain resources.

In an embodiment, the second UL sub-band is configured based on an RB set composed of contiguous RBs, and an offset exists between the start RB of the second UL sub-band and the start RB of the initial DL BWP in the DL symbol. Such offset is predefined or configured by the base station via signaling.

In an embodiment, the frequency domain size of the second UL sub-band is no smaller than the frequency domain size of the first initial UL BWP.

In an embodiment, if the frequency domain resource size is not configured for the second UL sub-band, the base station and the UE determine by default that the frequency domain resource size of the second UL sub-band is equal to that of the first initial UL BWP.

In an embodiment, if no time-domain resource position or period is configured for the second UL sub-band, the time-domain resource position and period of the second UL sub-band are identical to those of the first UL sub-band.

In an embodiment, the frequency domain start RB of the second UL sub-band is defined based on a common RB grid (e.g., the start RB of common RBs), for example, the frequency domain start RB of the second UL sub-band may have an offset relative to the start RB of the common RB grid.

In an embodiment, the second UL sub-band may be configured within the frequency domain range of the first initial UL BWP. In such cases, although the first initial UL BWP is not configured in the DL symbol, the second UL sub-band is configured in the DL symbol, and frequency domain resources of the second UL sub-band fall within the frequency domain resource range of the first initial UL BWP.

For UEs aware of SBFD configurations, the second UL sub-band and the first initial UL BWP exist simultaneously, and the base station and the UE may agree that PRACH transmission of the UE can be performed either on the second UL sub-band or on the first initial UL BWP. Accordingly, if the UE selects to perform PRACH transmission on the second UL sub-band (or the first initial UL BWP), other UL transmissions (such as subsequent msg3 transmission or msg4 PUCCH transmission) associated with such PRACH transmission can also be performed on the second UL sub-band (or the first UL sub-band).

To reduce the number of frequency domain gaps between the DL sub-band and the UL sub-band, the base station configures the frequency domain relationship between frequency domain resources of the second UL sub-band and frequency domain resources of the initial UL BWP to be complete inclusion or partial inclusion.

Exemplarily, in terms of frequency domain ranges, the second UL sub-band fully contains the initial UL BWP, or the initial UL BWP fully contains the second UL sub-band, or the second UL sub-band partially contains the initial UL BWP, or the initial UL BWP partially contains the second UL sub-band.

In an embodiment, frequency domain resources of the initial UL BWP and frequency domain resources of the second UL sub-band may also be contiguous.

The second UL sub-band is configured within the frequency domain range of the first UL sub-band. In such cases, both the second UL sub-band and the first UL sub-band exist simultaneously in the DL symbol, and the base station and the UE may agree that UL transmission in the random access procedure is performed on the second UL sub-band.

In an embodiment, PRACH transmission of the UE can be performed either on the second UL sub-band or on the first UL sub-band. Accordingly, if the UE selects to perform PRACH transmission on the second UL sub-band (or the first UL sub-band), other UL transmissions (such as subsequent msg3 transmission or msg4 PUCCH transmission) associated with such PRACH transmission are also performed on the second UL sub-band (or the first UL sub-band).

Similarly, to reduce the number of frequency domain gaps between UL sub-band(s) and DL sub-band(s), the base station configures the frequency domain relationship between frequency domain resources of the second UL sub-band and frequency domain resources of the first UL sub-band to be complete inclusion, partial inclusion, or contiguous frequency domain resources. The specific relationship between the first UL sub-band and the second UL sub-band, as well as methods for determining the size and position of the second UL sub-band, can refer to the foregoing embodiments and will not be repeated herein.

In an embodiment, frequency domain resources of the second UL sub-band are independently configured without restrictive relationships on frequency domain positions relative to the DL BWP or the initial DL BWP; that is, the frequency domain position and size of the second UL sub-band are configured independently.

In an embodiment, the second UL sub-band is configured to fall within both the frequency domain range of the initial DL BWP and the frequency domain range of the first initial UL BWP.

In operation S404, uplink transmission for a random access procedure of a UE is performed on the first uplink frequency domain resource. The states of the UE include CONNECTED state, IDLE state, and INACTIVE state.

The foregoing embodiments can also be applied to SBFD sub-band configurations on F symbols, and specific application manners can refer to the foregoing embodiments, which will not be elaborated on herein in embodiments of the present disclosure.

The embodiments of the present disclosure further provide an uplink frequency domain resource determination method applied to a base station. As shown in FIG. 8, the method includes the following operations S802 and S804.

In operation S802, a first uplink frequency domain resource is determined in a DL symbol.

In operation S804, uplink transmission data sent by a UE during a random access procedure is received on the first uplink frequency domain resource.

In the present embodiment, states of the UE include an idle state, an inactive state, and a connected state.

In an embodiment, determining the first uplink frequency domain resource in the DL symbol includes: configuring a plurality of contiguous RBs in the DL symbol based on a first UL sub-band in the DL symbol, wherein the plurality of contiguous RBs overlap with the first UL sub-band of the DL symbol in a frequency domain.

In an embodiment, configuring the first uplink frequency domain resource in the DL symbol includes: configuring a second initial UL BWP in the DL symbol as the first uplink frequency domain resource, wherein a frequency domain size of the second initial UL BWP is the same as a frequency domain size of a first initial UL BWP in a UL symbol.

In an embodiment, configuring the first uplink frequency domain resource in the DL symbol includes: configuring a first initial UL BWP in the DL symbol, wherein the first initial UL BWP in the DL symbol is identical to a first initial UL BWP in a UL symbol in a frequency domain; or in response to a first UL sub-band being configured in the DL symbol, configuring the first initial UL BWP in the DL symbol to be valid.

In an embodiment, configuring the first uplink frequency domain resource in the DL symbol includes: configuring a second UL sub-band in the DL symbol as the first uplink frequency domain resource, wherein the second UL sub-band overlaps with an initial DL BWP of the DL symbol in a frequency domain.

Through the foregoing operations, an uplink frequency domain resource available for uplink transmission of a UE is configured within a DL symbol. Such uplink frequency domain resource configuration supports uplink transmission of UEs in the idle state or inactive state. Accordingly, the problem that existing SBFD sub-band configurations and operations are not applicable to uplink transmission of IDLE/INACTIVE UEs can be solved.

To facilitate understanding of the technical solutions provided by the present disclosure, detailed descriptions are provided below in conjunction with embodiments of specific scenarios.

The embodiments of the present disclosure provide a specific UL sub-band configuration scheme, particularly a configuration method applicable when a cell-common SBFD sub-band and a UE-specific SBFD sub-band coexist. The SBFD sub-band includes at most one UL sub-band and at most two DL sub-bands.

To reduce signaling overhead, the following specific schemes may be adopted for SBFD sub-band configuration.

First, the base station configures one UL sub-band based on the following parameters: a start point of the UL sub-band, and the number of contiguous RBs of the UL sub-band (or an end point of the UL sub-band). The start point may be described based on RBs. For example, the base station indicates an RB index, or an RB offset (i.e., the start point can be obtained by offsetting n RBs from RB0) starting from the starting RB (i.e., RB0). The number of contiguous RBs is described based on RBs, for example, by indicating a quantity of RBs. The end point may be described based on RBs, for example, by indicating an RB index.

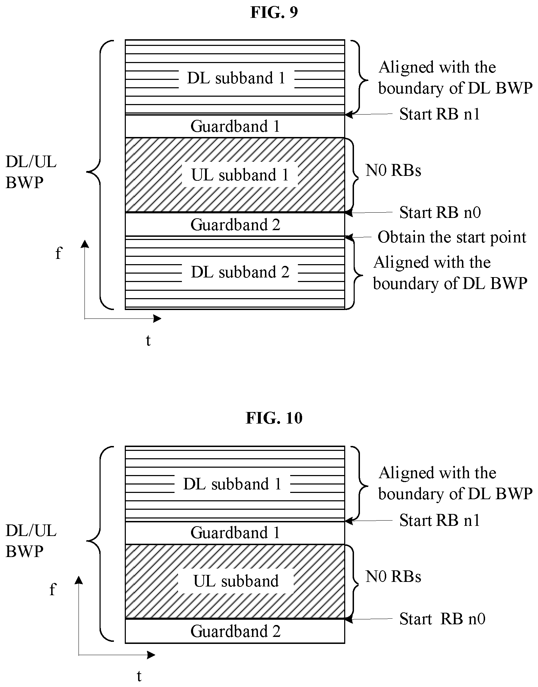

Second, the base station configures or determines a DL sub-band (for example, DL sub-band 1 shown in FIG. 9) based on the following parameters: a start point of the DL sub-band, and the number of contiguous RBs of the DL sub-band (or an end point of the DL sub-band).

Taking DL sub-band 1 in FIG. 9 as an example, the start point of DL sub-band 1 is described based on RBs: the base station indicates an RB index, or an RB offset (the start point is obtained by offsetting n RBs from RB0) starting from the starting RB (i.e., RB0). Alternatively, the start point of DL sub-band 1 may be derived based on a boundary of the UL sub-band (e.g., an upper boundary RB) combined with the size of a guardband. As another alternative, the start point of DL sub-band 1 may be obtained by configuring or agreeing on an RB offset with respect to a boundary of the UL sub-band (e.g., an upper boundary RB), where such RB offset may serve as the size of the guardband. The size of the DL sub-band shown in FIG. 9 may be configured based on the number of contiguous RBs, or derived based on a boundary corresponding to an initial DL BWP (or an initial UL BWP, or an activated DL BWP of the UE). For instance, the base station and the UE agree that a (another) boundary of DL sub-band 1 is aligned with a boundary of the activated DL BWP of the UE, the initial DL BWP, or the initial UL BWP, so as to avoid additional signaling notification of the number of contiguous RBs or boundary positions of the DL sub-band.

### For DL sub-band 2:

The process for determining the frequency domain position of the other DL sub-band (i.e., DL sub-band 2) corresponding to DL sub-band 1 is as follows: the base station configures or determines the DL sub-band (e.g., DL sub-band 2 corresponding to DL sub-band 1) based on the following parameters: a start point of the DL sub-band, and the number of contiguous RBs of the DL sub-band (or an end point of the DL sub-band), adopting the same principle as that for determining the frequency domain position of DL sub-band 1. Alternatively, the base station and the UE may agree that the frequency domain position of DL sub-band 2 is determined via the following procedure: the frequency domain position of DL sub-band 2 is determined based on the UL sub-band and guardbands. For example, guardband 1 and guardband 2 have identical sizes in the frequency domain. The start point of DL sub-band 2 is derived based on the boundary of the UL sub-band and the guardband size, and the size of DL sub-band 2 is derived based on the activated DL BWP of the UE (or the initial DL BWP or initial UL BWP). For example, a (another) boundary of DL sub-band 2 is aligned with a boundary of the activated DL BWP of the UE (or the initial DL BWP or initial UL BWP), eliminating the need for additional signaling to notify the number of contiguous RBs or boundary positions of the DL sub-band.

A scenario with only one DL sub-band is illustrated in FIG. 10, and the foregoing methods are also applicable herein. For example, if the frequency domain position of DL sub-band 2 is determined via the above procedure and the resulting frequency domain size of DL sub-band 2 equals zero, the base station and the UE agree that DL sub-band 2 does not exist, meaning the SBFD sub-band is configured to contain only one DL sub-band. As another alternative, the base station may signal to the UE that the frequency domain structure of the SBFD sub-band pattern is "DUD", "DU", or "UD", where D denotes a DL sub-band and U denotes a UL sub-band. If the SBFD pattern is signaled as "DU" or "UD", the UE no longer needs to further determine DL sub-band 2. When the SBFD sub-band pattern is "DU" or "UD", the foregoing schemes for determining the UL sub-band and DL sub-band 1 may be applied to the UL sub-band and DL sub-band 2 following the same principle.

The foregoing configuration schemes are applicable to a UE-specific SBFD sub-band, a cell-common SBFD sub-band, or only configuration of UL sub-band(s) or DL sub-band(s).

The embodiments of the present disclosure further provide another SBFD sub-band configuration scheme applicable to both the cell-common SBFD sub-band and the UE-specific SBFD sub-band.

The base station and the UE agree to configure cell-common UL sub-band(s) (and/or DL sub-band(s)) and UE-level UL sub-band(s) (and/or DL sub-band(s)). The base station separately configures or associates respective subcarrier spacings and/or cyclic prefixes for the cell-common UL sub-band(s) (and/or DL sub-band(s)) and UE-level UL sub-band(s) (and/or DL sub-band(s)). The base station also configures or associates respective resource sets of channels/signals (including time domain resources for channels such as PDSCH, PUSCH, PRACH, PUCCH, and SRS) for the cell-common UL sub-band(s) (and/or DL sub-band(s)) and UE-level UL sub-band(s) (and/or DL sub-band(s)); alternatively or additionally, the base station configures or associates respective parameters used for transmission/reception (including transmission power parameters, quasi-co-location characteristics, beam parameters, etc.) for the cell-common UL sub-band(s) (and/or DL sub-band(s)) and UE-level UL sub-band(s) (and/or DL sub-band(s)). Accordingly, UE-level UL sub-band(s) (and/or DL sub-band(s)) of different UEs may correspond to different resource sets and/or different parameters. After adopting such UL sub-band and/or DL sub-band configuration, the base station and the UE agree that if a UE-level channel or signal needs to be transmitted/received within a UL sub-band or DL sub-band, such transmission/reception is performed based on the resource set and the parameters corresponding to the UE-level UL sub-band/DL sub-band. If a cell-common channel or signal needs to be transmitted/received within a UL sub-band or DL sub-band, such transmission/reception is performed based on the resource set and the parameters corresponding to the cell-common UL sub-band or DL sub-band. The symbol "/" used throughout embodiments of the present disclosure represents the logical relationship "or".

In a case where no corresponding resource set and parameters are configured or associated for a UE-level UL sub-band/DL sub-band, the base station and the UE agree that if a UE-level channel or signal needs to be transmitted/received within a UL sub-band or DL sub-band, such transmission/reception is performed based on the resource set and parameters corresponding to the cell-common UL sub-band/DL sub-band.

The base station and the UE agree that the frequency domain position of a UE-level UL sub-band falls within the frequency domain range of a cell-common UL sub-band, and the frequency domain position of a UE-level DL sub-band falls within the frequency domain range of a cell-common DL sub-band. The following schemes are provided to achieve this constraint.

If the base station intends to configure a cell-common UL sub-band in a carrier, the base station determines the Subcarrier Spacing (SCS) configured for the carrier, determines a common RB (CRB) grid for the carrier based on such SCS, and uses CRB0 (the first CRB of one or more CRBs defined by the CRB grid in the carrier) or Point A (a conversion relationship exists between CRB0 and Point A, for example, the center of the lowest subcarrier (i.e., the first subcarrier) of CRB0 is aligned with Point A) as a reference.

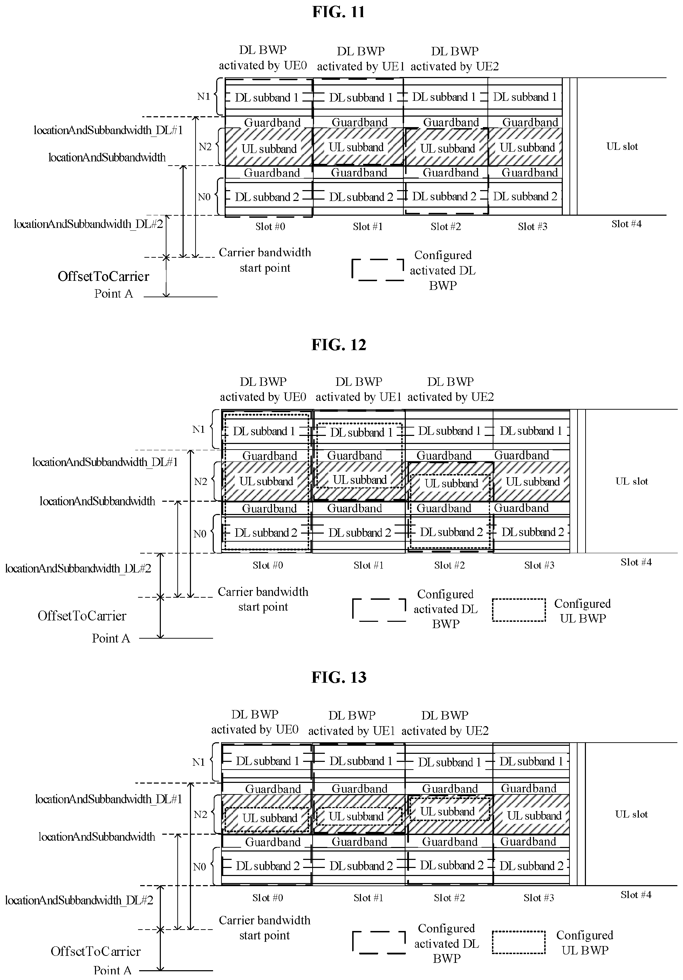

The base station configures the usable carrier bandwidth of the carrier based on Point A. For example, an offset (e.g., the offsetToCarrier parameter shown in FIG. 11) is used to obtain the start point of the carrier bandwidth (e.g., the carrier bandwidth start point shown in FIG. 11). Subsequently, parameters are used to describe the start position and size of the UL sub-band relative to such start point, such as the locationAndSub-bandwidth parameter illustrated in FIG. 11. The locationAndSub-bandwidth parameter is a single numerical value encoded from the frequency domain size and position of the UL sub-band, and the frequency domain size and position may be parsed from this numerical value. Such encoding scheme (commonly referred to as Resource Indicator Value (RIV) encoding) references the usage of locationAndBandwidth specified in TS 38.213/TS 38.331/TS 38.214. As an alternative, the start point and size of the UL sub-band may be separately signaled based on CRBs or the carrier bandwidth start point. The foregoing UL sub-band configuration scheme is applicable to a cell-common UL sub-band and may also be used to configure a UE-level UL sub-band where necessary.

After the UL sub-band is configured, the base station further configures the frequency domain size and position of DL sub-band 1 and DL sub-band 2 (only one DL sub-band may exist, with the other absent) relative to the carrier bandwidth start point. For example, the configuration may be performed through the locationAndSub-bandwidth_DL#1 parameter shown in FIG. 11. The locationAndSub-bandwidth_DL#1 parameter is a single numerical value encoded from the frequency domain size and position of DL sub-band 1, i.e., a value derived from RIV. The frequency domain size and position may be parsed from this numerical value. Such RIV scheme is defined in TS 38.214/TS 38.213. Alternatively, the base station separately signals the start point and size of the DL sub-band based on CRBs.

Configuration of DL sub-band 2 reuses the scheme corresponding to DL sub-band 1 following the same principle, which will not be repeated herein in embodiments of the present disclosure.

The following alternative configuration scheme may also be adopted for DL sub-band 2. First, guardbands on both sides of the UL sub-band are configured to have identical sizes. The start point of DL sub-band 2 is derived based on the UL sub-band and the guardbands. For example, the start point of DL sub-band 2 is obtained by offsetting the start point of the UL sub-band by the guardband size. The size of DL sub-band 2 may be assumed to be equal to the size of DL sub-band 1. Note that if the frequency domain size and position of DL sub-band 2 are configured prior to those of DL sub-band 1, the foregoing scheme may be reused after adaptive modification, which will not be elaborated herein.

The embodiments of the present disclosure further provide another efficient configuration scheme for a cell-common SBFD sub-band (including UL sub-band(s) and/or DL sub-band(s)) and UE-level UL sub-band(s) and/or DL sub-band(s) in a single carrier. Configuration signaling corresponding to such scheme is transmitted by the base station to the UE, and the UE parses such signaling in accordance with pre-agreed definitions between the base station and the UE. A set of predefined rules is also pre-agreed between the base station and the UE to complete SBFD sub-band configuration. For example, cell-common UL sub-band(s) and/or DL sub-band(s) may also be configured via the following scheme. In a carrier, the base station configures the size and position of cell-common SBFD sub-band resources (including UL sub-band(s) and/or DL sub-band(s)) based on the foregoing carrier bandwidth. Note that such SBFD sub-band may merely represent a block of time-frequency resources without preconfigured transmission direction attributes for downlink or uplink; resources for DL reception and UL transmission are further determined from such time-frequency resources via the schemes described below. Specifically, information indicating the size and position of SBFD sub-band resources is encoded into a parameter adopting the foregoing RIV encoding scheme based on the carrier bandwidth of the carrier (for example, the frequency domain size and position of the SBFD sub-band are configured based on the foregoing carrier bandwidth start point and carrier bandwidth size). The UE receives and parses such parameter to obtain the configured SBFD sub-band in the carrier. As an alternative, the start point and size of the SBFD sub-band may be separately configured based on the CRB or carrier bandwidth start point, including referencing the SCS corresponding to the CRB grid, thereby determining the frequency domain size and position of the SBFD sub-band in the carrier. Further, the base station configures frequency domain resources of a UL sub-band within the frequency domain range of the configured SBFD sub-band adopting the foregoing UL sub-band frequency domain resource configuration scheme (or reusing the SBFD sub-band frequency domain resource configuration scheme). For example, frequency domain resources of the UL sub-band are configured based on the configured SBFD sub-band. For example, the frequency domain size and position of the UL sub-band are also encoded via RIV encoding based on the start point and size of the SBFD sub-band. Such scheme reduces signaling overhead because the SBFD sub-band bandwidth is smaller relative to the carrier bandwidth. Naturally, if signaling overhead is not a constraint, the RIV encoding corresponding to the frequency domain size and position of the UL sub-band may also be based on the carrier bandwidth start point. The base station configures (or the base station and the UE agree on) the frequency domain size of guardbands, where such guardbands are contiguous with the boundaries of the UL sub-band and located outside the UL sub-band. Remaining frequency domain resources within the configured SBFD sub-band after excluding the UL sub-band and guardbands may be used for DL reception (e.g., as frequency domain resources of the DL sub-band). Such scheme enables configuration of two DL sub-bands with equal or unequal frequency domain sizes, and delivers lower signaling overhead as well as higher flexibility. Note that DL sub-band frequency domain resources obtained via this scheme may be regarded as cell-common DL sub-band(s) or UE-level DL sub-band(s), forming an SBFD sub-band containing UL sub-band(s) and DL sub-band(s). This scheme supports configuration of a cell-common SBFD sub-band, a cell-common UL sub-band, a cell-common DL sub-band (where required), as well as a UE-level UL sub-band and a UE-level DL sub-band. If the SBFD sub-band and the UL sub-band/DL sub-band are designated as cell-common, the base station and the UE agree that the SCS and CP corresponding to such UL sub-band are identical to the SCS and CP of the initial UL BWP (or initial DL BWP).

If the foregoing configured SBFD sub-band, UL sub-band, and DL sub-band are all cell-common, UE-level UL sub-band(s) and DL sub-band(s) may be further derived via the following procedure combined with the foregoing cell-common SBFD sub-band, UL sub-band, and DL sub-band configurations. The base station and the UE agree that frequency domain resources overlapping between an activated DL BWP of the UE and the foregoing derived DL sub-band are used for transmission/reception of UE-level channels/signals, and such overlapping frequency domain resources are configured or associated with the SCS and/or CP of the activated DL BWP. Such overlapping resources may also be referred to as a UE-level DL sub-band. As another alternative, frequency domain resources overlapping between an activated DL BWP of the UE and frequency domain resources within the foregoing derived SBFD sub-band excluding the UL sub-band and guardbands are used for transmission/reception of UE-level channels/signals, and such overlapping resources are configured or associated with the SCS and/or CP of the activated DL BWP. Such overlapping resources may also be referred to as a UE-level DL sub-band. Further, UL resources used for UE-level transmission are derived from the UL sub-band via the following procedure. For example, the base station and the UE agree that frequency domain resources overlapping between an activated UL BWP of the UE and the foregoing derived UL sub-band are used for transmission of UE-level UL channels/signals, and such overlapping resources are configured or associated with the SCS and/or CP of the activated UL BWP (or the SCS and/or CP of the activated DL BWP of the UE, since such overlapping resources are located within the DL symbol corresponding to the activated DL BWP of the UE). Such overlapping resources may also be referred to as a UE-level UL sub-band.

The UE receives and parses relevant configuration signaling based on the foregoing configuration procedures and signaling to obtain the frequency domain size and position of UL sub-band(s)/DL sub-band(s) within the SBFD sub-band. Note that the foregoing schemes for configuring cell-common UL sub-band(s)/DL sub-band(s) are also applicable to configuration of UE-level UL sub-band(s)/DL sub-band(s).

Based on configured cell-common UL sub-band(s) and DL sub-band(s), the following schemes for configuring UE-level UL sub-band(s)/DL sub-band(s) are further provided.

### Scheme 1

Frequency domain resources of an activated DL BWP of the UE are used to determine resources of a UE-level UL sub-band and/or a UE-level DL sub-band.

The base station configures an activated DL BWP for the UE. In the frequency domain, frequency domain resources overlapping between such DL BWP and the foregoing configured cell-common UL sub-band serve as the UE-level UL sub-band of the UE. In the frequency domain, frequency domain resources overlapping between such DL BWP and the foregoing configured cell-common DL sub-band serve as the UE-level DL sub-band of the UE. This configuration scheme introduces no signaling overhead for UE-level UL sub-band and DL sub-band configuration.

A UE-level UL sub-band may also be configured via the following scheme: the base station configures the frequency domain size and position based on the start point (or boundary) of the cell-common UL sub-band. For example, the base station signals the start RB and number of RBs of the UE-level UL sub-band based on the start point of the cell-common UL sub-band. As another alternative, the base station signals a parameter obtained by RIV encoding the size and position of the UE-level UL sub-band, where such RIV encoding is based on the size/start point of the cell-common UL sub-band rather than the size/start point of the foregoing SBFD sub-band, thereby achieving lower signaling overhead.

A specific exemplary implementation of Scheme 1 is illustrated in FIG. 11.

### Scheme 2

Frequency domain resources of an activated DL BWP of the UE are used to determine resources of a UE-level DL sub-band, and frequency domain resources of an activated UL BWP of the UE are used to determine resources of a UE-level UL sub-band.

The base station configures an activated UL BWP for the UE. In the frequency domain, frequency domain resources overlapping between such UL BWP and the foregoing configured cell-common UL sub-band serve as the UE-level UL sub-band of the UE. If the UL BWP of the UE has no frequency domain overlap with the cell-common UL sub-band, the base station and the UE agree that uplink transmission of the UE is performed based on the UL BWP without utilizing the cell-common UL sub-band; or the base station and the UE agree that no UE-level UL sub-band is configured for the UE, yet the UE may utilize the cell-common UL sub-band for uplink transmission. This configuration scheme introduces no signaling overhead for UE-level UL sub-band and DL sub-band configuration.

In the frequency domain, frequency domain resources overlapping between such DL BWP and the foregoing configured cell-common DL sub-band serve as the UE-level DL sub-band of the UE. If the DL BWP of the UE does not overlap with the cell-common DL sub-band in the frequency domain, the base station and the UE agree that downlink reception of the UE is performed based on the DL BWP without utilizing the cell-common DL sub-band; or the base station and the UE agree that no UE-level DL sub-band is configured for the UE, yet the UE may utilize the cell-common DL sub-band for downlink reception. This configuration scheme introduces no signaling overhead for UE-level UL sub-band and DL sub-band configuration.

A UE-level UL sub-band may also be configured via the following scheme: the base station configures the frequency domain size and position based on the start point (or boundary) of the cell-common UL sub-band. For example, the base station signals the start RB and number of RBs of the UE-level UL sub-band based on the start point of the cell-common UL sub-band. As another alternative, the base station signals a parameter obtained by RIV encoding the size and position of the UE-level UL sub-band, where such RIV encoding is based on the size/start point of the cell-common UL sub-band rather than the size/start point of the foregoing SBFD sub-band, thereby achieving lower signaling overhead.

A specific exemplary implementation of Scheme 2 is illustrated in FIG. 12.

### Scheme 3

Frequency domain resources of a UE-level UL sub-band are directly configured, with a constraint that the frequency domain resources of the configured UE-level UL sub-band fall within the frequency domain resource range of the cell-common UL sub-band. Optionally, frequency domain resources of an activated DL BWP of the UE are used to determine resources of a UE-level DL sub-band.

The base station configures the UE-level UL sub-band for the UE based on the cell-common UL sub-band. For example, in the frequency domain, the UE-level UL sub-band is configured based on the start point and size of the cell-common UL sub-band. For example, within the cell-common UL sub-band, the size and position of the UE-level UL sub-band are configured via the foregoing RIV encoding based on the start point and bandwidth of the cell-common UL sub-band. As an alternative, the start RB (relative to the start point of the cell-common UL sub-band) and number of contiguous RBs of the UE-level UL sub-band may be directly configured.

In the frequency domain, frequency domain resources overlapping between such DL BWP and the foregoing configured cell-common DL sub-band serve as the UE-level DL sub-band of the UE. If the DL BWP of the UE does not overlap with the cell-common DL sub-band in the frequency domain, the base station and the UE agree that downlink reception of the UE is performed based on the DL BWP without utilizing the cell-common DL sub-band; or the base station and the UE agree that no UE-level DL sub-band is configured for the UE, yet the UE may utilize the cell-common DL sub-band for downlink reception. This configuration scheme introduces no signaling overhead for UE-level UL sub-band and DL sub-band configuration.

A UE-level UL sub-band may also be configured via the following scheme: the base station configures the frequency domain size and position based on the start point (or boundary) of the cell-common UL sub-band. For example, the base station signals the start RB and number of RBs of the UE-level UL sub-band based on the start point of the cell-common UL sub-band. As another alternative, the base station signals a parameter obtained by RIV encoding the size and position of the UE-level UL sub-band, where such RIV encoding is based on the size/start point of the cell-common UL sub-band rather than the size/start point of the foregoing SBFD sub-band, thereby achieving lower signaling overhead.

A specific exemplary implementation of Scheme 3 is illustrated in FIG. 13.

In addition to the foregoing explicit definition/configuration of the size and position of UE-level UL sub-band(s)/DL sub-band(s), the base station and the UE may agree to support implicit definition/configuration of the size and position of UE-level UL sub-band(s)/DL sub-band(s). Even without explicit size and position configuration, respective subcarrier spacings and/or cyclic prefixes may still be configured or associated for transmission/reception of UE-level channels/signals. In addition, respective resource sets (including time domain resources for channels such as PDSCH, CORESET#0, PDCCH, PUSCH, PRACH, PUCCH, SRS, etc.) and/or respective parameters (including transmission power parameters, quasi-co-location characteristics, beam parameters, etc.) used for transmission/reception may be configured or associated for transmission/reception of UE-level channels/signals.

For example, the base station and the UE agree that if transmission/reception of a UE-level channel/signal is configured or determined to occur within a cell-common UL sub-band/DL sub-band, the base station and the UE perform such transmission/reception based on at least one of the following:
the subcarrier spacing and/or cyclic prefix associated with the channel/signal corresponding to such transmission/reception;
the resource set associated with the channel/signal corresponding to such transmission/reception;
the parameters associated with the channel/signal corresponding to such transmission/reception (including transmission power parameters, quasi-co-location characteristics, beam parameters, etc.).

As another example, the base station and the UE agree that if transmission/reception of a cell-common channel/signal (referring to channels/signals transmitted/received by multiple UEs, such as PRACH, PDCCH associated with CORESET#0, SSB, SIBs, etc.) is configured or determined to occur within a cell-common UL sub-band/DL sub-band, the base station and the UE perform such transmission/reception based on at least one of the following:
the subcarrier spacing and/or cyclic prefix associated with (the channels/signals within) such cell-common UL sub-band/DL sub-band;
the resource set associated with (the channels/signals within) such cell-common UL sub-band/DL sub-band;
the parameters (including transmission power parameters, quasi-co-location characteristics, beam parameters, etc.) associated with (the channels/signals within) such cell-common UL sub-band/DL sub-band.

This scheme eliminates the need to configure UE-level UL sub-band(s)/DL sub-band(s), thereby reducing signaling overhead.

The following method is adopted for the base station and the UE to determine whether transmission/reception of a channel/signal is cell-common or UE-level. If transmission/reception corresponding to a channel/signal is configured or executed for at least two UEs, such transmission/reception of the channel is deemed cell-common; otherwise, such transmission/reception of the channel is deemed UE-level.

The following method is adopted for the base station and the UE to determine whether transmission/reception of a channel/signal occurs on SBFD sub-band resources. The base station and the UE determine the time-frequency resources where transmission/reception of a channel/signal takes place, and determine the time-frequency resources of the SBFD sub-band (or time-frequency resources of the UE-level SBFD sub-band). If the time-frequency resources for transmission/reception of the channel/signal fall within the time-frequency resources of the corresponding UL sub-band/DL sub-band, the base station and the UE determine that transmission/reception of the channel/signal occurs on SBFD sub-band resources; otherwise, such transmission/reception does not utilize SBFD sub-band resources. Note that if the transmission/reception is UE-level, the UL sub-band/DL sub-band referenced herein refers to a UE-level UL sub-band/DL sub-band; if the transmission/reception is cell-level, the UL sub-band/DL sub-band referenced herein refers to a cell-common UL sub-band/DL sub-band.

Frequency domain resources of an SBFD sub-band may be configured adopting the foregoing schemes. Time domain resources of the SBFD sub-band may be configured based on slots or OFDM symbols.

In the related art, an SBFD sub-band may be configured within a flexible symbol (F symbol), and such F symbol may be separately configured as a DL symbol or a UL symbol respectively for DL reception or UL transmission. For simplicity, the following rules are provided for scenarios where the SBFD sub-band is configured on the F symbol or a UL sub-band is configured within the SBFD symbol, to reduce configuration and implementation complexity.

The base station and the UE agree that if an SBFD sub-band is configured on an F symbol configured via TDD-UL-DL-ConfigCommon signaling, one of the following operations is supported:
The F symbol may be reconfigured as a DL symbol for UE1 via UE specific signaling of UE1;
After the F symbol is reconfigured as a DL symbol for UE1, the original SBFD sub-band configuration on such F symbol remains unchanged from the perspective of UE1 (for example, frequency domain resources of UL sub-band(s) and DL sub-band(s) are unchanged);
After the F symbol is reconfigured as a DL symbol for UE1, the original SBFD sub-band configuration on such F symbol is revoked from the perspective of UE1;
After such reconfiguration of the F symbol to a DL symbol, UE1 still uses the F symbol for UL transmission only on resources of the UL sub-band, and uses the F symbol for DL transmission only on resources of the DL sub-band;
The F symbol may be reconfigured as a UL symbol for UE1 via UE specific signaling of UE1;
After the F symbol is reconfigured as a UL symbol for UE1, the original SBFD sub-band configuration on such F symbol remains unchanged from the perspective of UE1 (for example, frequency domain resources of UL sub-band(s) and DL sub-band(s) are unchanged). Note that this results in an SBFD sub-band configured within the UL symbol of UE1;
After the F symbol is reconfigured as a UL symbol for UE1, the original SBFD sub-band configuration on such F symbol is revoked from the perspective of UE1;
After such reconfiguration of the F symbol to a UL symbol, UE1 still uses the F symbol for UL transmission only on resources of the UL sub-band, and uses the F symbol for DL transmission only on resources of the DL sub-band;
The F symbol is prohibited from being reconfigured as a UL symbol or DL symbol via UE specific signaling of UE1;
If DCI signaling scrambled by SFI-RNTI is used to change the F symbol to a DL symbol or UL symbol, UE1 treats such DCI signaling as inapplicable for the F symbol configured with the SBFD sub-band;
The F symbol configured with the SBFD sub-band is prohibited from being changed to a DL symbol or a UL symbol via DCI signaling scrambled by SFI-RNTI;
If UE specific signaling or UE common signaling of UE1 is used to reconfigure such F symbol as a UL symbol, the UE treats such UE specific signaling or UE common signaling of UE1 as inapplicable for such F symbol;
If an F symbol is reconfigured as a UL symbol via UE specific or UE common signaling of UE1, UE1 does not expect such F symbol to be configured with an SBFD sub-band.

Based on the foregoing description of the implementations, those having ordinary skill in the art may clearly understand that the methods according to the above embodiments can be implemented by means of software plus a necessary general-purpose hardware platform. Of course, the methods may also be implemented by hardware, yet the former is a preferable implementation in most cases. From such perspective, the technical solutions of the present disclosure, or the parts contributing to the related art in essence, may be embodied in the form of a computer software product. The computer software product is stored in a storage medium (such as Read-Only Memory (ROM)/Random Access Memory (RAM), magnetic disk, and optical disc) and contains a plurality of instructions for enabling a terminal device (which may be a mobile phone, a computer, a server, a network device, or the like) to execute the methods described in each embodiment of the present disclosure.

The present embodiment further provides an uplink frequency domain resource determination device configured to implement the foregoing embodiments and exemplary implementations, and details already elaborated will not be repeated herein. As used hereinafter, the term "module" refers to a combination of software and/or hardware capable of implementing predetermined functions. Although the device described in the following embodiments is preferably implemented by software, implementations via hardware or a combination of software and hardware are also feasible and contemplated.

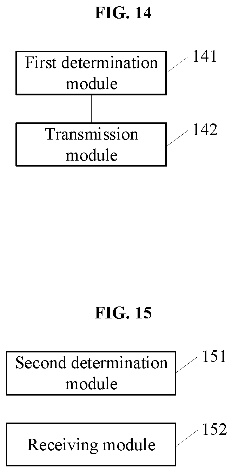

FIG. 14 is a structural block diagram of an uplink frequency domain resource determination device according to an embodiment of the present disclosure. As shown in FIG. 14, the device is disposed on a terminal and includes:
a first determination module 141, configured to determine a first uplink frequency domain resource in a Downlink (DL) symbol; and
a transmission module 142, configured to perform uplink transmission for a random access procedure of a User Equipment (UE) on the first uplink frequency domain resource.

FIG. 15 is a structural block diagram of an uplink frequency domain resource determination device according to another embodiment of the present disclosure. As shown in FIG. 15, the device is disposed on a base station and includes:
a second determination module 151, configured to determine a first uplink frequency domain resource in a Downlink (DL) symbol; and
a receiving module 152, configured to receive, on the first uplink frequency domain resource, uplink transmission data sent by a User Equipment (UE) during a random access procedure.

It should be noted that each of the foregoing modules may be implemented by software or hardware. For hardware implementation, the following manners are available without limitation: all the foregoing modules are integrated into one processor; or each of the foregoing modules is arranged in different processors in any combined manner.

The embodiments of the present disclosure further provide a computer-readable storage medium storing a computer program therein. The computer program is configured to, when executed, perform the operations of any one of the foregoing method embodiments.

In an exemplary embodiment, the foregoing computer-readable storage medium may include, but is not limited to, various media capable of storing computer programs, such as a Universal Serial Bus (USB) flash drive, a Read-Only Memory (ROM), a Random Access Memory (RAM), a portable hard disk, a magnetic disk, or an optical disc.

The embodiments of the present disclosure further provide an electronic device, including a memory and a processor. A computer program is stored in the memory, and the processor is configured to run the computer program to perform the operations of any one of the foregoing method embodiments.

In an exemplary embodiment, the foregoing electronic device may further include a transmission device and an input/output device. The transmission device is connected to the processor, and the input/output device is connected to the processor.

For specific examples in the present embodiment, reference may be made to the examples described in the foregoing embodiments and exemplary implementations, which will not be elaborated on herein.

Apparently, those having ordinary skill in the art shall appreciate that each module or each operation of the present disclosure described above may be implemented by a general computing apparatus. They may be integrated on a single computing apparatus or distributed on a network composed of multiple computing apparatuses. They may be implemented by program code executable by the computing apparatuses, so that the program code may be stored in a storage apparatus and executed by the computing apparatuses. Under certain circumstances, the operations shown or described may be performed in an order different from that set forth herein. Alternatively, each module or operation may be fabricated as a separate integrated circuit module, or multiple modules or operations thereof may be fabricated into a single integrated circuit module for implementation. Accordingly, the present disclosure is not limited to any specific combination of hardware and software.

The foregoing descriptions are merely exemplary embodiments of the present disclosure and are not intended to limit the present disclosure. Various modifications and variations may be made by those having ordinary skill in the art without departing from the scope of the present disclosure. Any modification, equivalent replacement, improvement and the like made within the principle of the present disclosure shall fall within the protection scope of the present disclosure.

## Claims

1. An uplink frequency domain resource determination method, comprising:
determining a first uplink frequency domain resource in a Downlink, DL, symbol; and
performing uplink transmission for a random access procedure of a User Equipment, UE, on the first uplink frequency domain resource.

2. The method according to claim 1, wherein the UE is in an idle state or an inactive state.

3. The method according to claim 1, wherein determining the first uplink frequency domain resource in the DL symbol comprises:
configuring a plurality of contiguous Resource Blocks, RBs, in the DL symbol based on a first Uplink, UL, sub-band in the DL symbol, wherein the plurality of contiguous RBs overlap with the first UL sub-band of the DL symbol in a frequency domain.

4. The method according to claim 1, wherein in response to the first uplink frequency domain resource being a plurality of contiguous RBs, determining the first uplink frequency domain resource in the DL symbol comprises:
determining the plurality of contiguous RBs according to a start resource block or an end resource block of a first UL sub-band in the DL symbol and based on a first offset, wherein the first offset is predefined, or the first offset is notified by a base station via signaling.

5. The method according to claim 1, wherein in response to the first uplink frequency domain resource being a plurality of contiguous RBs, a time-domain position of the plurality of contiguous RBs is the same as a time-domain period and/or a time-domain position of a first UL sub-band.

6. The method according to claim 1, wherein in response to the first uplink frequency domain resource being a plurality of contiguous RBs, a number of the plurality of contiguous RBs does not exceed a number of resource blocks corresponding to a first initial UL Bandwidth Part, BWP, in a frequency domain, and the first initial UL BWP is configured for UL transmission in a UL symbol.

7. The method according to claim 1, wherein in response to the first uplink frequency domain resource being a plurality of contiguous RBs, determining the first uplink frequency domain resource in the DL symbol comprises one of:
determining a plurality of resource blocks, which start from one boundary of a first UL sub-band and extend inward within the first UL sub-band, as the plurality of contiguous RBs; or
determining a plurality of resource blocks at a center of the first UL sub-band as the plurality of contiguous RBs.

8. The method according to claim 1, wherein a first UL sub-band or RBs overlap with a DL BWP of the DL symbol in a frequency domain.

9. The method according to claim 1, wherein in a case where RBs overlap with a DL BWP of the DL symbol in a frequency domain, the method further comprises one of:
configuring the RBs and the DL BWP to use time division multiplexing;
configuring UL transmission on the RBs and DL reception on an initial DL BWP to have different usage priorities.

10. The method according to claim 1, wherein configuring the first uplink frequency domain resource in the DL symbol comprises:
configuring a second initial UL BWP in the DL symbol as the first uplink frequency domain resource, wherein a frequency domain size of the second initial UL BWP is the same as a frequency domain size of a first initial UL BWP in a UL symbol.

11. The method according to claim 1, wherein in response to a second initial UL BWP being configured in the DL symbol as the first uplink frequency domain resource, a time-domain period and/or a time-domain position of the second initial UL BWP is the same as a time-domain period and/or a time-domain position of a first UL sub-band of the DL symbol.

12. The method according to claim 1, wherein in response to a second initial UL BWP being configured in the DL symbol as the first uplink frequency domain resource, the second initial UL BWP overlaps with a first UL sub-band in a frequency domain.

13. The method according to claim 1, wherein configuring the first uplink frequency domain resource in the DL symbol comprises:
configuring a first initial UL BWP in the DL symbol, wherein the first initial UL BWP in the DL symbol is identical to a first initial UL BWP in a UL symbol in a frequency domain; or
in response to a first UL sub-band being configured in the DL symbol, configuring the first initial UL BWP to be valid in the DL symbol.

14. The method according to claim 1, wherein configuring the first uplink frequency domain resource in the DL symbol comprises:
configuring a second UL sub-band in the DL symbol as the first uplink frequency domain resource, wherein the second UL sub-band overlaps with an initial DL BWP of the DL symbol in a frequency domain.

15. The method according to claim 1, wherein in response to a second UL sub-band being configured in the DL symbol as the first uplink frequency domain resource, a time-domain period and/or a time-domain position of the second UL sub-band is the same as a time-domain period and/or a time-domain position of a first UL sub-band of the DL symbol.

16. The method according to claim 1, wherein in response to a second UL sub-band being configured in the DL symbol as the first uplink frequency domain resource, frequency domain resources of a first UL sub-band and frequency domain resources of the second UL sub-band are contiguous in a frequency domain.

17. The method according to claim 1, wherein in response to a second UL sub-band being configured in the DL symbol as the first uplink frequency domain resource, frequency domain resources of the second UL sub-band fall within a frequency domain resource range of a first initial UL BWP in a UL symbol.

18. An uplink frequency domain resource determination method, applied to a base station, comprising:
determining a first uplink frequency domain resource in a Downlink, DL, symbol; and
receiving, on the first uplink frequency domain resource, uplink transmission data sent by a User Equipment, UE, during a random access procedure.

19. The method according to claim 18, wherein the UE is in an idle state or an inactive state.

20. The method according to claim 18, wherein determining the first uplink frequency domain resource in the DL symbol comprises:
configuring a plurality of contiguous Resource Blocks, RBs, in the DL symbol based on a first Uplink, UL, sub-band in the DL symbol, wherein the plurality of contiguous RBs overlap with the first UL sub-band of the DL symbol in a frequency domain.

21. The method according to claim 18, wherein configuring the first uplink frequency domain resource in the DL symbol comprises:
configuring a second initial UL Bandwidth Part, BWP, in the DL symbol as the first uplink frequency domain resource, wherein a frequency domain size of the second initial UL BWP is the same as a frequency domain size of a first initial UL BWP in a UL symbol.

22. The method according to claim 18, wherein configuring the first uplink frequency domain resource in the DL symbol comprises:
configuring a first initial UL BWP in the DL symbol, wherein the first initial UL BWP in the DL symbol is identical to a first initial UL BWP in a UL symbol in a frequency domain; or
in response to a first UL sub-band being configured in the DL symbol, configuring the first initial UL BWP in the DL symbol to be valid.

23. The method according to claim 18, wherein configuring the first uplink frequency domain resource in the DL symbol comprises:
configuring a second UL sub-band in the DL symbol as the first uplink frequency domain resource, wherein the second UL sub-band overlaps with an initial DL BWP of the DL symbol in a frequency domain.

24. An uplink frequency domain resource determination device disposed on a terminal, comprising:
a first determination module, configured to determine a first uplink frequency domain resource in a Downlink, DL, symbol; and
a transmission module, configured to perform uplink transmission for a random access procedure of a User Equipment, UE, on the first uplink frequency domain resource.

25. An uplink frequency domain resource determination device disposed on a base station, comprising:
a second determination module, configured to determine a first uplink frequency domain resource in a Downlink, DL, symbol; and
a receiving module, configured to receive, on the first uplink frequency domain resource, uplink transmission data sent by a User Equipment, UE, during a random access procedure.

26. A computer-readable storage medium, storing a computer program therein, wherein the computer program, when executed by a processor, causes the processor to implement operations of the method according to any one of claims 1 to 17, or implement operations of the method according to any one of claims 18 to 23.

27. An electronic device, comprising a memory, a processor, and a computer program stored on the memory and executable by the processor, wherein the processor, when executing the computer program, implements operations of the method according to any one of claims 1 to 17, or implements operations of the method according to any one of claims 18 to 23.
